# EUROPEAN PATENT SPECIFICATION

(11) **EP 4 440 093 B1**
(45) Date of publication and mention of the grant of the patent: **19.11.2025**
(21) Application number: 21968947.8
(22) Date of filing: 22.12.2021
(51) Int. Cl.: H04L 12/28, F24F 11/56, F24F 11/63, H05B 47/115, H05B 47/19, H04W 4/02

(54) **FACILITY CONTROL SYSTEM**
ANLAGENSTEUERUNGSSYSTEM
SYSTÈME DE COMMANDE D'INSTALLATION

(43) Date of publication of application: 02.10.2024
(73) Proprietor: MITSUBISHI ELECTRIC CORPORATION, Chiyoda-ku Tokyo 100-8310 (JP)
(72) Inventor: UMEDA, Shusaku, Tokyo 100-8310 (JP); TAIRA, Akinori, Tokyo 100-8310 (JP); SANO, Hiroyasu, Tokyo 100-8310 (JP); KURITA, Akira, Tokyo 100-8310 (JP)
(74) Representative: Pfenning, Meinig & Partner mbB
(86) International application number: PCT/JP2021/047640
(87) International publication number: WO 2023/119510

(56) References cited:
- EP-A1- 3 650 775
- WO-A1-2009/034720
- CN-A- 110 986 297
- CN-A- 112 148 334
- JP-A- 2011 075 246
- JP-A- 2016 031 616
- JP-A- 2019 526 952
- US-A1- 2013 289 777

## Description

### Field

The present disclosure relates to a facility control system that controls facilities in buildings or similar structures.

### Background

For example, Patent Literature 1 discloses a system that determines where a user is present in a space where devices such as lighting equipment and air conditioners are installed on the basis of a detection result of a temperature distribution sensor. The system divides the devices into those in an area where the user is present and those in an area where the user is not present, and performs different controls for each. In addition, in a case of controlling the devices in an area where a user is present, the system described in Patent Literature 1 determines control contents to be performed on the basis of adjustment contents of the devices performed in the past in the area.
EP3650775A1 discloses an air conditioning control device including: a radio wave detection processing unit configured to detect a radio wave arriving from a smartphone through a plurality of wireless communicators disposed at different positions; a position estimation unit configured to estimate the terminal position of the smartphone based on a result obtained by detecting the radio wave arriving from the smartphone from each of the plurality of wireless communicators; a request environment acquisition unit configured to acquire the request environment setting; and an indoor machine control unit configured to control an air conditioning indoor machine based on an estimated terminal position which is the terminal position estimated by the position estimation unit and the request environment setting acquired by the request environment acquisition unit.

### Citation List

### Patent Literature

Patent Literature **1:** WO 2017/168855

### Summary

### Technical Problem

The system described in Patent Literature 1 determines whether or not a user is present in an area on the basis of the presence or absence of a heat source, and controls a device without confirming whether or not the user who is present in the area matches a user who has adjusted the device in the past. Therefore, in a case where the user who has performed adjustment in the past differs from the user who is present in the area, unnecessary control is performed, and there is a possibility that the adjustment result desired by the user is not obtained.

The present disclosure has been made in view of the above, and an object of the present disclosure is to obtain a communication terminal capable of realizing a system that controls facilities in accordance with user requests.

### Solution to Problem

The invention is defined in the appended set of claims. To solve the problem described above and achieve the object, the present disclosure provides a communication terminal constituting a facility control system together with a central controller to control a plurality of facilities capable of performing communication using an ultra wide band signal, and the communication terminal comprises: a communication unit to communicate with the plurality of facilities using the ultra wide band signal; a distance measurement unit to calculate distances from the communication terminal to t facility as a counterpart in communication on a basis of a result of the communication by the communication unit; a position estimation unit to estimate a position of the communication terminal on a basis of the distance calculated by the distance measurement unit; and a user information notification unit to notify the central controller of user information including position information indicating the position estimated by the position estimation unit and request information relating to control of the facility and having been acquired from a user, and to cause the central controller to perform control in accordance with the user information notified.

### Advantageous Effects of Invention

A communication terminal according to the present disclosure can achieve an effect of being able to realize a system that controls facilities in accordance with user requests.

### Brief Description of Drawings

FIG. 1 is a diagram illustrating an exemplary configuration of a facility control system according to a first embodiment.
FIG. 2 is a diagram illustrating an exemplary configuration of a communication terminal according to the first embodiment.
FIG. 3 is a diagram illustrating an exemplary configuration of an air conditioning device according to the first embodiment.
FIG. 4 is a diagram illustrating an exemplary configuration of a lighting device according to the first embodiment.
FIG. 5 is a diagram illustrating an exemplary configuration of a central controller according to the first embodiment.
FIG. 6 is a sequence diagram illustrating an example of an operation of the facility control system according to the first embodiment.
FIG. 7 is a flowchart illustrating an example of an operation of a communication terminal according to a second embodiment.
FIG. 8 is a sequence diagram illustrating an example of an operation of a facility control system according to a third embodiment.
FIG. 9 is a sequence diagram illustrating an example of an operation of a facility control system according to a fourth embodiment.
FIG. 10 is a diagram illustrating an exemplary configuration of a facility control system according to a fifth embodiment.
FIG. 11 is a diagram illustrating an exemplary configuration of a central controller according to the fifth embodiment.
FIG. 12 is a sequence diagram illustrating an example of an operation of the facility control system according to the fifth embodiment.
FIG. 13 is a diagram illustrating an example of hardware that realizes communication terminals according to the first to fifth embodiments.

### Description of Embodiments

Hereinafter a facility control system according to embodiments of the present disclosure will be described in detail with reference to the drawings.

### First Embodiment.

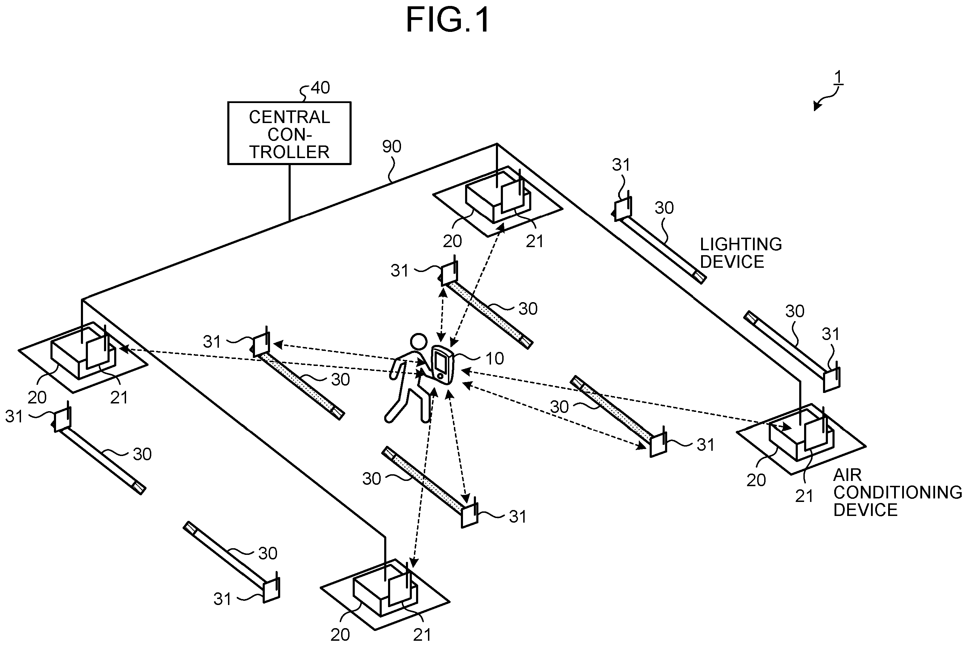

FIG. 1 is a diagram illustrating an exemplary configuration of a facility control system according to a first embodiment. As illustrated in FIG. 1, a facility control system 1 according to the first embodiment includes a communication terminal 10 used by a user, one or more air conditioning devices 20 and lighting devices 30, which are facilities in a building or a similar structure, and a central controller 40 that controls the air conditioning devices 20.

The communication terminal 10 is capable of performing communication using ultra wide band (UWB), and communicates with the air conditioning devices 20 and the lighting devices 30 using UWB. In addition, the communication terminal 10 has a positioning function of estimating the position of the terminal itself on the basis of transmission/reception results of a UWB signal that is an ultra wide band signal. Note that the communication terminal 10 may be configured to be capable of performing wireless communication by other methods in addition to UWB. The communication terminal 10 may be a general communication device such as a smartphone, or a dedicated communication device for communicating with the air conditioning devices 20 and the lighting devices 30.

The air conditioning devices 20 and the central controller 40 are connected to a communication line 90. The central controller 40 controls the air conditioning devices 20 by wired communication via the communication line 90. Any methods may be used as the wired communication performed between the air conditioning devices 20 and the central controller 40 via the communication line 90.

In addition, the air conditioning device 20 includes a communication unit 21 for performing communication using UWB, and the lighting device 30 includes a communication unit 31 for performing communication using UWB.

Here, an outline of an overall operation of the facility control system 1 illustrated in FIG. 1 will be described. In the facility control system 1, the communication terminal 10 communicates with a plurality of surrounding air conditioning devices 20 using UWB (hereinafter, referred to as UWB communication), measures a distance to each of the air conditioning devices 20 as counterparts in communication, and further estimates the position of the terminal itself from the distances to the respective air conditioning devices 20. In addition, the communication terminal 10 transmits position information indicating the estimated position of the terminal itself to the central controller 40 and the lighting devices 30. The position information is transmitted from the communication terminal 10 to the central controller 40 via the air conditioning devices 20 and the communication line 90. At this time of operation, the communication terminal 10 transmits request information relating to control of the air conditioning device 20 and the lighting device 30 together with the position information. The central controller 40 determines the air conditioning device 20 to be controlled on the basis of the position information and the request information received from the communication terminal 10, and controls the determined air conditioning device 20 to be controlled. The lighting device 30 performs a light adjustment process of adjusting the intensity (brightness), color, and the like of the light emitted from a light source on the basis of the position information and the request information received from the communication terminal 10.

Next, configurations of the communication terminal 10, the air conditioning device 20, the lighting device 30, and the central controller 40 will be described.

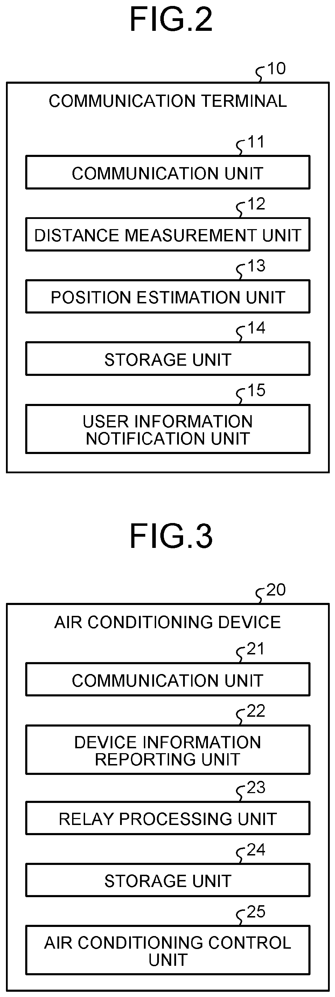

FIG. 2 is a diagram illustrating an exemplary configuration of the communication terminal 10 according to the first embodiment. The communication terminal 10 includes a communication unit 11, a distance measurement unit 12, a position estimation unit 13, a storage unit 14, and a user information notification unit 15.

The communication unit 11 performs UWB communication with devices, such as the air conditioning devices 20 and the lighting devices 30, having a UWB communication function.

The distance measurement unit 12 calculates distances from the terminal in which it is included (communication terminal 10) to the devices as counterparts in UWB communication on the basis of the result of the UWB communication by the communication unit 11.

The position estimation unit 13 estimates the position of the communication terminal 10 on the basis of the distances from the communication terminal 10 to the plurality of respective counterpart devices, calculated by the distance measurement unit 12.

The storage unit 14 stores various types of information, for example, request information relating to control of the air conditioning device 20, request information relating to control of the lighting device 30, position information indicating the position of the communication terminal 10 estimated by the position estimation unit 13, a terminal identifier (ID), which is identification information of the communication terminal 10, and the like. The request information relating to the control of the air conditioning device 20 is, for example, a set temperature, a set humidity, an air blowing amount, an air blowing direction, and the like. The request information relating to the control of the lighting device 30 is, for example, a light emission amount, a light emission color, and the like. The communication terminal 10 acquires the request information relating to the control of the air conditioning device 20 and the request information relating to the control of the lighting device 30 from a user at an arbitrary timing and stores the acquired information in the storage unit **14.** The user of the communication terminal 10 inputs preferred settings such as a set temperature, a set humidity, a light emission amount, and the like via, for example, an input unit (not illustrated). Note that, in the following description, the request information relating to the control of the air conditioning device 20 and the request information relating to the control of the lighting device 30 are collectively referred to as facility control request information in some cases.

In a case where the position estimation unit 13 estimates the position of the communication terminal 10, the user information notification unit 15 notifies surrounding air conditioning devices 20 and lighting devices 30 of the position information indicating the estimated position, and the facility control request information and the terminal ID that are stored in the storage unit 14, as user information. Then, the user information notification unit 15 causes the air conditioning devices 20 and the lighting devices 30 to perform control in accordance with the user information notified. For example, the user information notification unit 15 notifies the surrounding air conditioning devices 20 and lighting devices 30 of the user information by broadcasting the user information via the communication unit **11.** Note that the user information notified to the air conditioning devices 20 is relayed to the central controller 40, and the central controller 40 controls the air conditioning devices 20 on the basis of the user information. The lighting device 30 controls the operation of the device itself in accordance with the user information notified from the communication terminal 10.

FIG. 3 is a diagram illustrating an exemplary configuration of the air conditioning device 20 according to the first embodiment. The air conditioning device 20 includes the communication unit 21, a device information reporting unit 22, a relay processing unit 23, a storage unit 24, and an air conditioning control unit 25.

The communication unit 21 performs UWB communication with a device, such as the communication terminal 10, having a UWB communication function. In addition, the communication unit 21 communicates with the central controller 40 via the communication line 90.

The device information reporting unit 22 transmits a report signal including information relating to the device in which it is included (air conditioning device 20) at a given timing, thereby reporting, to the communication terminal 10 existing around the air conditioning device 20, the information relating to the air conditioning device 20. The information relating to the air conditioning device 20 is, for example, position information of the air conditioning device 20, identification information of the air conditioning device 20, and the like. The device information reporting unit 22 transmits a report signal including at least the position information of the air conditioning device 20 and the identification information of the air conditioning device 20.

In a case of receiving the user information (the position information and the terminal ID of the communication terminal 10 and the facility control request information) from the communication terminal 10, the relay processing unit 23 relays the user information to the central controller 40. In addition, in a case of receiving data directed to the communication terminal 10 from the central controller 40, the relay processing unit 23 relays the data to the communication terminal 10.

The storage unit 24 stores various types of information, for example, the position information of the air conditioning device 20, the identification information of the air conditioning device 20, timing at which the device information reporting unit 22 transmits a report signal, and the like.

The air conditioning control unit 25 controls respective parts of an indoor unit and an outdoor unit (not illustrated) of the air conditioning device 20, for example, controls a fan, a compressor, and the like such that the temperature and humidity around the user approach values requested by the user.

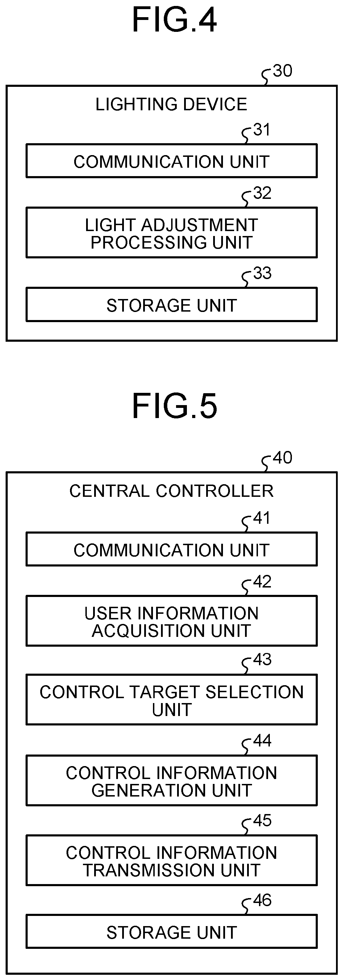

FIG. 4 is a diagram illustrating an exemplary configuration of the lighting device 30 according to the first embodiment. The lighting device 30 includes the communication unit 31, a light adjustment processing unit 32, and a storage unit 33.

The communication unit 31 performs UWB communication with a device, such as the communication terminal 10, having a UWB communication function.

The light adjustment processing unit 32 controls a light source (not illustrated) (for example, a light emitting diode (LED)), and adjusts the intensity, color, and the like of the light emitted from the light source to a state requested by the user.

The storage unit 33 stores various types of information, for example, position information of the device in which it is included (lighting device 30), identification information of the lighting device 30, and the like.

FIG. 5 is a diagram illustrating an exemplary configuration of the central controller 40 according to the first embodiment. The central controller 40 includes a communication unit 41, a user information acquisition unit 42, a control target selection unit 43, a control information generation unit 44, a control information transmission unit 45, and a storage unit 46.

The communication unit 41 communicates with the air conditioning devices 20 via the communication line 90.

The user information acquisition unit 42 acquires the user information (the position information and the terminal ID of the communication terminal 10 and the facility control request information) transmitted from the communication terminal 10 via the air conditioning device 20 and the communication line 90.

The control target selection unit 43 selects the air conditioning device 20 to be subjected to the air conditioning control from among the plurality of air conditioning devices 20 connected via the communication line 90, on the basis of the user information acquired by the user information acquisition unit 42.

The control information generation unit 44 generates control information for the air conditioning device 20 on the basis of the user information acquired by the user information acquisition unit 42.

The control information transmission unit 45 transmits the control information generated by the control information generation unit 44 to the air conditioning device 20 to be controlled.

The storage unit 46 stores various types of information, for example, position information of the air conditioning devices 20 constituting the facility control system 1, the user information acquired by the user information acquisition unit 42, the control information generated by the control information generation unit 44, and the like.

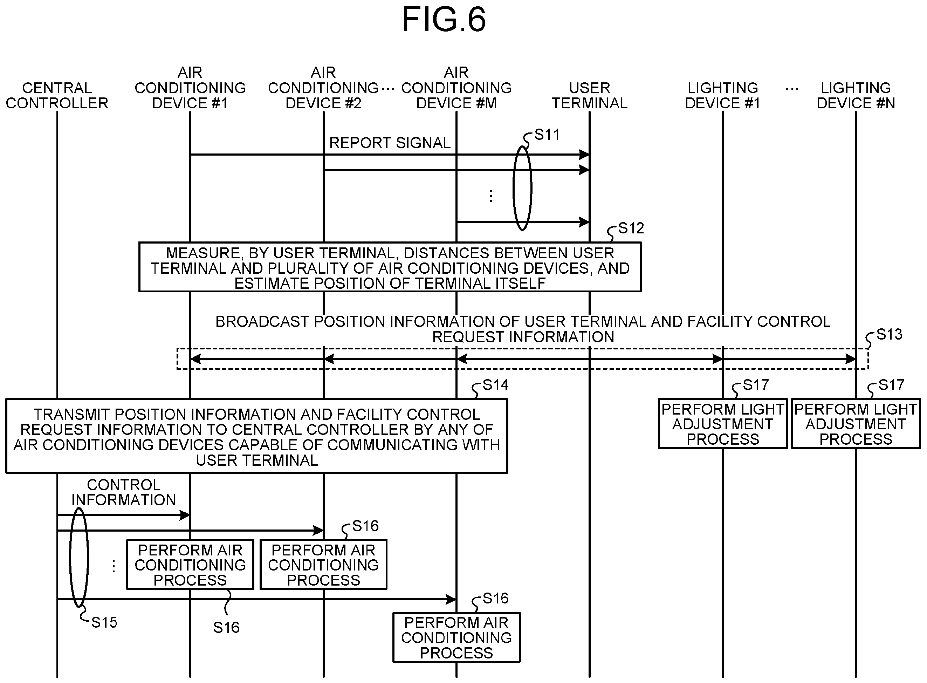

Next, a detailed operation of the facility control system 1 will be described with reference to FIG. 6. FIG. 6 is a sequence diagram illustrating an example of an operation of the facility control system 1 according to the first embodiment. In FIG. 6, air conditioning devices #1 to #M correspond to the plurality of air conditioning devices 20 illustrated in FIG. 1, and lighting devices #1 to #N correspond to the plurality of lighting devices 30 illustrated in FIG. **1****.** The user terminal corresponds to the communication terminal 10.

In the facility control system 1, the air conditioning devices #1 to #M transmit report signals at predetermined timings, and the user terminal receives the report signals (step S11). The report signal includes at least the identification information and the position information of the air conditioning device as a transmission source.

Next, the user terminal measures distances between the user terminal and a plurality of air conditioning devices selected from among the air conditioning devices as transmission sources of the report signals received in step S11, and estimates the position of the terminal itself (step S12). The user terminal selects three or more air conditioning devices, performs distance measurement, and estimates the position of the terminal itself by trilateration using the distance measurement result and the position information of the selected air conditioning devices. In step S12, for example, the user terminal selects arbitrary three air conditioning devices from among the air conditioning devices as transmission sources of the report signals, transmits and receives UWB signals to and from the selected three air conditioning devices, and calculates the distance between the device itself and each of the three air conditioning devices on the basis of transmission time points and reception time points of the UWB signals. Furthermore, the user terminal calculates an estimated position of the terminal itself using the calculated distances and the position information that has been received from the three air conditioning devices in step S11. Note that the user terminal may acquire the position information of the three air conditioning devices not from the report signals received in step S11, but rather when transmitting and receiving the UWB signals in step S12. In a case of a configuration where the position information is acquired when transmitting and receiving the UWB signals in step S12, the user terminal may omit acquisition of the position information of the air conditioning device, the position information of which has been acquired in the past, and may only transmit and receive UWB signals for distance measurement.

Next, the user terminal broadcasts the position information of the terminal itself and the facility control request information (step S13). Note that the position information broadcast by the user terminal is the position information indicating the position of the terminal itself estimated in step S12.

Next, any of the air conditioning devices capable of communicating with the user terminal transmits the position information and the facility control request information to the central controller (step S14). That is, any of the air conditioning devices that have received the position information and the facility control request information broadcast from the user terminal in step S13 transmits the received position information and facility control request information to the central controller. Note that all the air conditioning devices that have received the position information and the facility control request information may transmit the position information and the facility control request information to the central controller. In addition, when transmitting the position information and the facility control request information, the air conditioning device may exclude the request information relating to the control of the lighting device, and transmit only the request information relating to the control of the air conditioning device.

Next, the central controller that has received the position information and the facility control request information from the air conditioning device generates control information for the air conditioning devices and transmits the control information to each of the air conditioning devices (step S15). In step S15, the central controller determines an air conditioning device to be controlled on the basis of, for example, the received position information, and generates control information for the air conditioning device to be controlled on the basis of the received request information. The central controller may select the air conditioning device closest to the user terminal as a control target, may select m (m being an integer of two or more) air conditioning devices close to the user terminal as control targets, or may select air conditioning devices within a certain range from the user terminal as control targets. In addition, the central controller generates control information instructing the air conditioning device to cause the temperature and humidity around the user terminal to be values indicated by the received facility control request information, for example.

The air conditioning device that has received the control information from the central controller performs an air conditioning process in accordance with the received control information, and controls the temperature around the user terminal to approach a value requested by a user using the user terminal (step S16).

In addition, when receiving the position information and the facility control request information broadcast from the user terminal in step S13, the lighting device performs a light adjustment process on the basis of the received position information and facility control request information (step S17). In step S17, the lighting device specifies, for example, a positional relationship between the device itself and the user terminal, and determines whether or not light adjustment is necessary. For example, in a case where the distance from the device itself to the user terminal is smaller than a given value, the lighting device determines that light adjustment is necessary. In addition, in a case where the lighting device can detect a state in which the light emitted from the lighting device does not directly reach the user terminal, such as a case where the user terminal exists at a position that cannot be seen from the device itself, the lighting device determines that light adjustment is unnecessary. In a case of determining that light adjustment is necessary, the lighting device performs a light adjustment process in accordance with the facility control request information. Note that the light adjustment process here includes a process of turning from a lighting-off state to a lighting state in addition to adjustment of the intensity, color, and the like of the light. In a case of adjusting the intensity of the light, the lighting device may determine the adjustment amount on the basis of the distance from the device itself to the user terminal. For example, in a case where the distance is large, the adjustment amount is also set to large.

Note that the air conditioning devices #1 to #M repeatedly execute step S11 described above at a predetermined cycle. The user terminal executes steps S12 to S17 described above every time the user terminal receives report signals from the air conditioning devices #1 to #M.

In this manner, in the facility control system 1 according to the present embodiment, the communication terminal 10 as a user terminal transmits and receives UWB signals to and from the plurality of surrounding air conditioning devices 20, performs distance measurement, and estimates the position of the terminal itself on the basis of the distances, which are obtained by the distance measurement, to the air conditioning devices 20 and the position information of the air conditioning devices 20. In addition, the communication terminal 10 transmits the position information indicating the estimated position of the terminal itself and the facility control request information (the request information relating to the control of the air conditioning device 20 and the lighting device 30) that have been acquired from the user to the central controller 40 that controls the air conditioning devices 20, and the lighting devices 30. The central controller 40 controls the air conditioning devices 20 on the basis of the facility control request information received from the communication terminal 10. The lighting device 30 performs a light adjustment process on the basis of the position information and the facility control request information received from the communication terminal 10, and adjusts the intensity of the light to be emitted, the color of the light to be emitted, and the like. As a result, it is possible to realize the control of the air conditioning devices 20 and the lighting devices in accordance with requests of the user using the communication terminal 10.

Note that, in the present embodiment, each of the air conditioning devices 20 transmits a report signal at regular intervals, and the communication terminal 10 performs distance measurement and position determination in a case of receiving the report signal from the air conditioning device 20. As another example, a configuration may be adopted in which the air conditioning devices 20 do not transmit a report signal. In this case, the communication terminal 10 attempts to measure distances to air conditioning devices at an arbitrary timing, and determines the position of the terminal itself in a case where the distances can be measured. For example, the communication terminal 10 transmits signals for detecting the air conditioning devices 20 at regular intervals, and in a case of receiving response signals to the transmitted signals, calculates distances from the terminal itself to the air conditioning devices 20 as transmission sources of the response signals on the basis of the transmission time points and the reception time points of the signals. In a case where the distance measurement between the communication terminal 10 and three or more air conditioning devices 20 is completed, the position of the terminal itself is estimated. The communication terminal 10 may transmit signals for detecting the air conditioning devices 20 not at regular intervals but rather when receiving a predetermined operation from a user.

### Second Embodiment.

Next, a facility control system according to a second embodiment will be described. The configuration of the facility control system according to the second embodiment is similar to that of the facility control system 1 according to the first embodiment. In addition, configurations of the communication terminal 10, the air conditioning device 20, the lighting device 30, and the central controller 40, which constitute the facility control system, are similar to those in the first embodiment. In the present embodiment, portions different from those in the first embodiment will be described.

As described above, in the facility control system 1 according to the first embodiment, each of the air conditioning devices 20 transmits a report signal at regular intervals, and the communication terminal 10 determines the position of the terminal itself every time the communication terminal 10 receives the report signal, and transmits information on the estimated position of the terminal itself (position information) and the facility control request information to the central controller 40 and the lighting devices 30, thereby controlling the air conditioning devices 20 and the lighting devices 30 around the communication terminal 10. Therefore, in a case where the communication terminal 10 is not being moved, each operation is repeatedly performed even through the control of the air conditioning devices 20 and the lighting devices 30 is unnecessary, and thus, the power consumption becomes larger than necessary, and the consumption speed of the battery of the communication terminal 10 becomes faster.

In order to solve such a problem, in the facility control system 1 according to the present embodiment, when the communication terminal 10 is in a state of not being moved, the execution frequency of the operation illustrated in FIG. 6 described in the first embodiment is reduced, and power consumption is reduced.

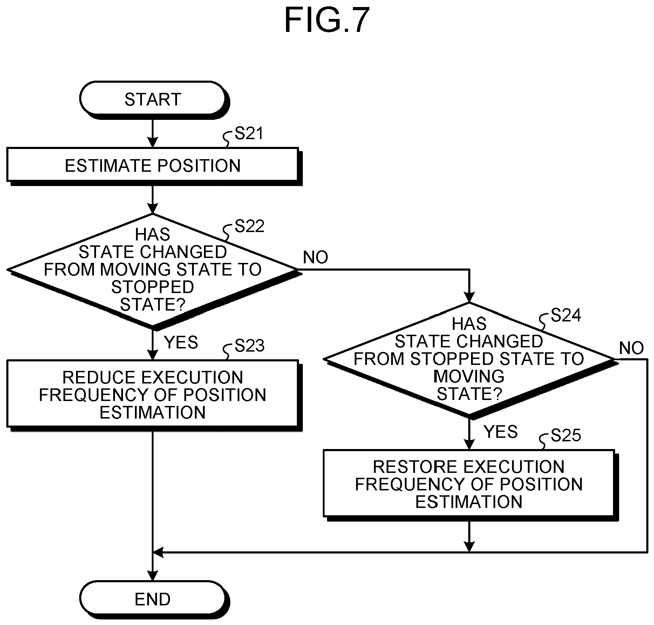

FIG. 7 is a flowchart illustrating an example of an operation of the communication terminal 10 according to the second embodiment.

As illustrated in FIG. 7, the communication terminal 10 according to the second embodiment estimates the position of the terminal itself, and thereafter, determines whether the state of the terminal itself has changed from a moving state to a stopped state (steps S21 and S22). Here, step S21 corresponds to step S12 in FIG. 6 described in the first embodiment. The communication terminal 10 according to the second embodiment executes processes in the respective steps illustrated in FIG. 6, and further executes processes illustrated in FIG. 7. That is, the communication terminal 10 according to the second embodiment executes step S12 illustrated in FIG. 6 to estimate the position of the terminal itself, and thereafter, executes processes in steps S13 to S17 illustrated in FIG. 6, and further executes steps S22 to S25 illustrated in FIG. 7. Steps S22 to S25 illustrated in FIG. 7 may be executed after execution of steps S13 to S17 in FIG. 6, or may be executed in parallel with steps S13 to S17.

In step S22, for example, in a case where a difference between the position of the terminal itself estimated last time and the position of the terminal itself estimated this time is equal to or more than a given threshold value, the communication terminal 10 determines that the terminal itself is in a moving state, and in a case where the difference is less than the threshold value, the communication terminal 10 determines that the terminal itself is in a stopped state. In a case where the determination result of the state of the terminal itself obtained last time is the moving state and the determination result of the state of the terminal itself obtained this time is the stopped state, the communication terminal 10 determines that the state has changed from the moving state to the stopped state.

In a case where the state of the terminal itself is changed from the moving state to the stopped state (step S22: Yes), the communication terminal 10 reduces the execution frequency of position estimation (step S23). For example, the communication terminal 10 changes the setting such that the position estimation executed every time the communication terminal 10 receives a report signal is executed every time the communication terminal 10 receives a report signal K times (K being an integer of two or more). After executing step S23, the communication terminal 10 terminates the operation.

In a case where the state of the terminal itself is not changed from the moving state to the stopped state (step S22: No), the communication terminal 10 determines whether the state of the terminal itself has changed from the stopped state to the moving state (step S24). That is, in a case where the determination result of the state of the terminal itself obtained last time is the stopped state and the determination result of the state of the terminal itself obtained this time is the moving state, the communication terminal 10 determines that the state has changed from the stopped state to the moving state.

In a case where the state of the terminal itself is changed from the stopped state to the moving state (step S24: Yes), the communication terminal 10 restores the execution frequency of the position estimation (step S25). That is, the communication terminal 10 changes the setting such that the position estimation is executed every time the communication terminal 10 receives a report signal. After executing step S25, the communication terminal 10 terminates the operation. In a case where the state of the terminal itself is not changed from the stopped state to the moving state (step S24: No), the communication terminal 10 terminates the operation.

In this manner, the communication terminal 10 according to the present embodiment confirms whether the terminal itself is in the stopped state or the moving state, and when the terminal itself is in the stopped state, reduces the execution frequency of the operation of estimating the position and requesting control of the air conditioning devices 20 and the lighting devices 30 (transmission of the position information and the facility control request information). As a result, power consumption of the communication terminal 10 can be reduced.

### Third Embodiment.

Next, a facility control system according to a third embodiment will be described. The configuration of the facility control system according to the third embodiment is similar to that of the facility control system 1 according to the first embodiment. In addition, configurations of the communication terminal 10, the air conditioning device 20, the lighting device 30, and the central controller 40, which constitute the facility control system, are similar to those in the first embodiment. In the present embodiment, portions different from those in the first embodiment will be described.

The facility control system 1 according to the present embodiment further has a function of updating firmware of the lighting device 30 in addition to the function included in the facility control system 1 according to the first embodiment.

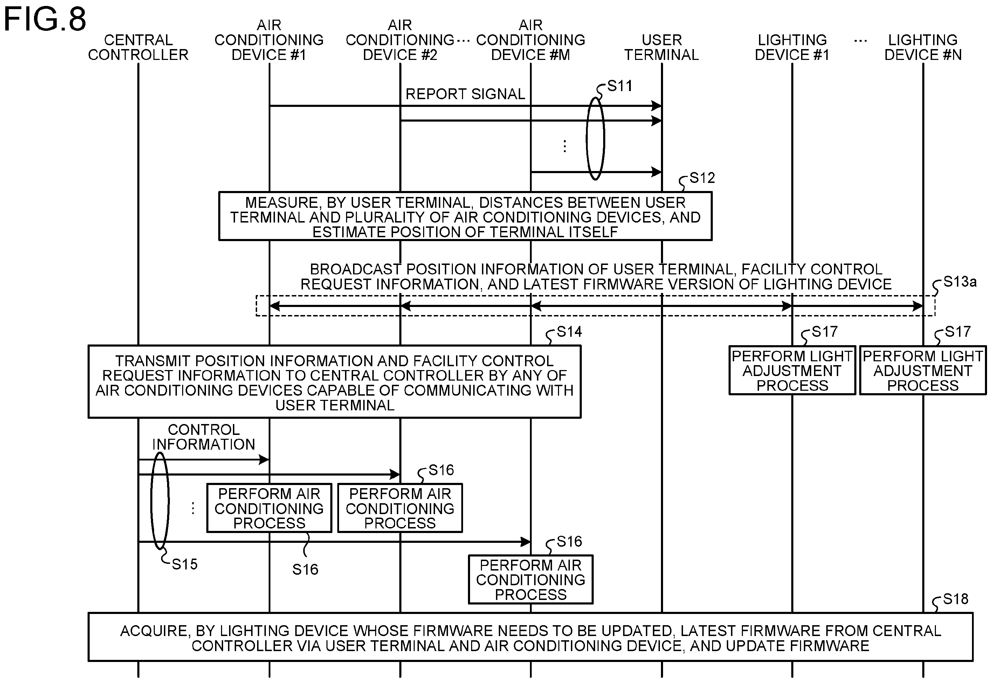

Each lighting device 30 is capable of performing UWB communication with the communication terminal 10, but is not connected to the communication line 90, and operates in a stand-alone manner. Therefore, in the facility control system 1 according to the present embodiment, in a case where the firmware of the lighting device 30 is updated, the latest firmware is transmitted from the central controller 40 to the lighting device 30 via the air conditioning device 20 and the communication terminal 10. This operation will be described with reference to FIG. 8.

FIG. 8 is a sequence diagram illustrating an example of an operation of the facility control system 1 according to the third embodiment. FIG. 8 is a diagram obtained by partially changing the sequence diagram in FIG. 6. Step numbers same as those in the sequence diagram in FIG. 6 indicate the same processes as those in FIG. 6.

As illustrated in FIG. 8, in the facility control system 1 according to the present embodiment, the user terminal estimates the position of the terminal itself in step S12, and thereafter, broadcasts the position information of the terminal itself, the facility control request information, and the latest firmware version of the lighting device (step S13a). That is, in step S13a, in addition to the information broadcast in step S13 described in the first embodiment, information of the latest firmware version of the lighting device is broadcast. For example, in a case where the firmware is updated, the information of the latest firmware version of the lighting device is transmitted from the central controller to the air conditioning devices #1 to #M. The air conditioning devices #1 to #M include the information of the latest firmware version of the lighting device in the report signal to be transmitted in step S11.

The lighting devices #1 to #N compare the current firmware version of the device itself and the latest firmware version broadcast from the user terminal in step S13a, and in a case where the current firmware version differs from the latest firmware version, determine that the firmware needs to be updated, and execute step S18 after step S17 to update the firmware.

In step S18, the lighting device that has determined that the firmware needs to be updated transmits a firmware update request to the user terminal. The firmware update request transmitted from the lighting device is relayed from the user terminal to any of the air conditioning devices, and further relayed from the air conditioning device to the central controller. Upon receiving the firmware update request, the central controller transmits the latest firmware of the lighting device to the lighting device as a request source via any of the air conditioning devices and the user terminal. The lighting device that has received the latest firmware changes the firmware to be used to the latest firmware.

In this manner, in the facility control system 1 according to the present embodiment, the communication terminal 10 as a user terminal broadcasts the information of the latest firmware version of the lighting device 30 in addition to the position information and the facility control request information, which are described in the first embodiment. In a case where the firmware held by the lighting device 30 differs from the latest firmware, the lighting device 30 updates the firmware via the communication terminal 10 and the air conditioning device 20. As a result, the firmware of the lighting device 30 operating in a stand-alone manner can be updated.

Note that, in a case where the terminal itself is in the stopped state, the communication terminal 10 may reduce the execution frequency of the position estimation, similarly to the second embodiment.

In addition, the operation of updating the firmware of the lighting device via the communication terminal 10 may be restricted to be performed via a specific communication terminal 10, for example, a maintenance-use communication terminal 10 with a specific terminal ID. For example, step S18 is executed in a case where the current firmware version of the lighting devices **#1** to #N differs from the latest firmware version received from the communication terminal 10, and in a case where the terminal ID of the communication terminal 10 that has transmitted the latest firmware version has a specific value. As a result, it is possible to prevent firmware from being transmitted to a general communication terminal 10, and as a result, to prevent the leakage of firmware to the outside.

### Fourth Embodiment.

Next, a facility control system according to a fourth embodiment will be described. The configuration of the facility control system according to the fourth embodiment is similar to that of the facility control system 1 according to the first embodiment. In addition, configurations of the communication terminal 10, the air conditioning device 20, the lighting device 30, and the central controller 40, which constitute the facility control system, are similar to those in the first embodiment. In the present embodiment, portions different from those in the first embodiment will be described.

In the facility control system 1 according to the first to third embodiments, the air conditioning devices 20 transmit report signals, but in the facility control system 1 according to the present embodiment, the air conditioning devices 20 and the lighting devices 30 transmit report signals. The communication terminal 10 measures distances between the communication terminal 10 and the air conditioning devices 20 or the lighting devices 30, and estimates the position of the terminal itself.

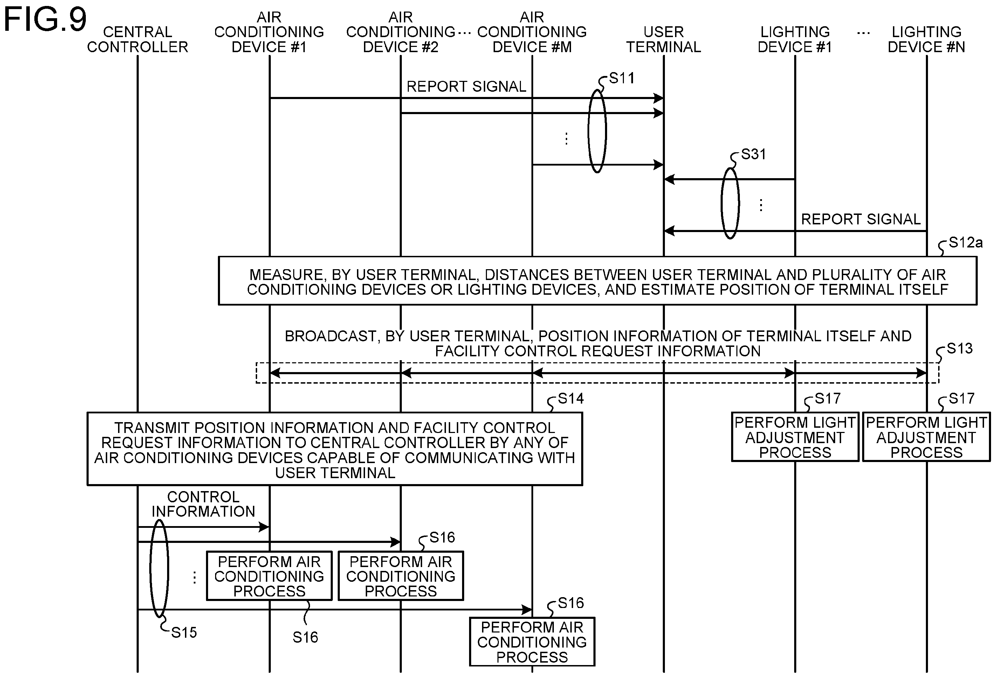

FIG. 9 is a sequence diagram illustrating an example of an operation of the facility control system 1 according to the fourth embodiment. FIG. 9 is a diagram obtained by partially changing the sequence diagram in FIG. 6. Step numbers same as those in the sequence diagram in FIG. 6 indicate the same processes as those in FIG. 6.

As illustrated in FIG. 9, in the facility control system 1 according to the present embodiment, the lighting devices #1 to #N transmit report signals similar to the report signals transmitted by the air conditioning devices #1 to #M (step S31). The user terminal measures distances between the user terminal and a plurality of devices (air conditioning devices or lighting devices) selected from among the air conditioning devices as transmission sources of the report signals received in step S11 or the lighting devices as transmission sources of the report signals received in step S31, and estimates the position of the terminal itself (step S12a). The plurality of devices as distance measurement targets may include a mixture of air conditioning devices and lighting devices. Step S13 and the subsequent steps are similar to those in the first embodiment. Similarly to the first to third embodiments, the lighting devices #1 to #N may be configured to operate in a stand-alone manner, or may be connected to the communication line 90 and configured to be controlled by the central controller, similarly to the air conditioning devices **#1 to** #M.

In this manner, in the facility control system 1 according to the present embodiment, the air conditioning devices 20 and the lighting devices 30 transmit report signals, and the communication terminal 10 calculates distances from the communication terminal 10 to the devices selected from among the air conditioning devices 20 or the lighting devices 30 as transmission sources of the received report signals, and obtains the position of the terminal itself. The facility control system 1 according to the present embodiment can achieve effects similar to those acquired in the first embodiment.

### Fifth Embodiment.

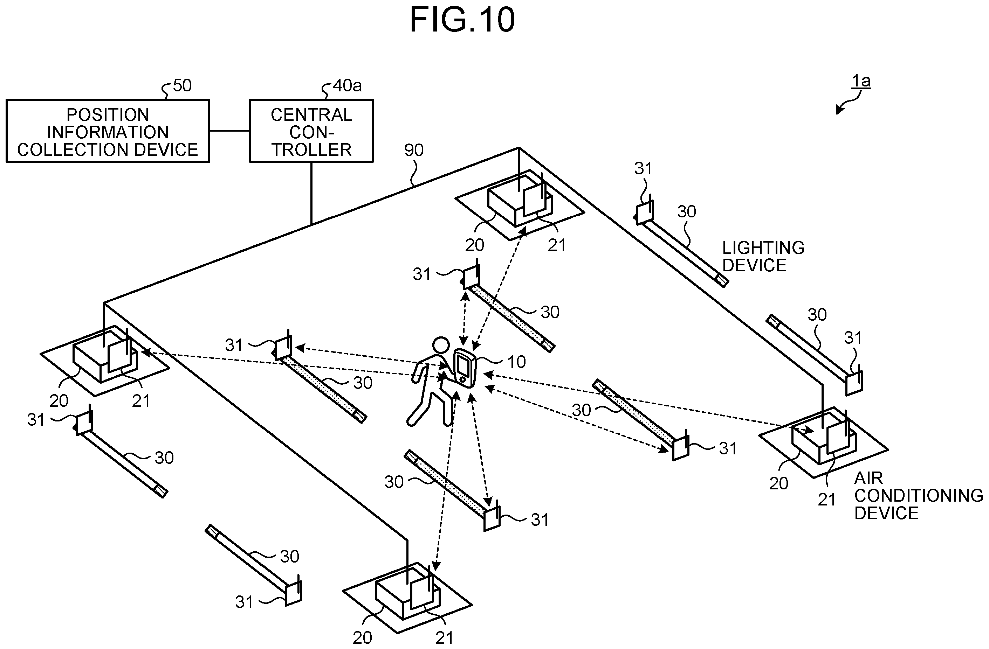

Next, a facility control system according to a fifth embodiment will be described. FIG. 10 is a diagram illustrating an exemplary configuration of a facility control system 1a according to the fifth embodiment. The facility control system 1a according to the fifth embodiment has a configuration in which the central controller 40 of the facility control system 1 according to the first to fourth embodiments is replaced with a central controller 40a, and a position information collection device 50 is further added. In the present embodiment, portions different from those in the first to fourth embodiments will be described.

The position information collection device 50 is connected to the central controller 40a. Note that the position information collection device 50 may be connected to the central controller 40a via the communication line 90, or may be connected to the central controller 40a via a communication network (not illustrated).

The position information collection device 50 collects and manages the terminal ID and the position information of the communication terminal 10 via the central controller 40a. In a case where the position information collection device 50 receives a request from, for example, a monitoring system that monitors the position of the communication terminal 10, the position information collection device 50 provides the monitoring system with the managed position information.

In a case where the central controller 40a acquires the user information (the position information and the terminal ID of the communication terminal 10 and the facility control request information) transmitted from the communication terminal 10 via the air conditioning device 20 and the communication line 90, the central controller 40a extracts the position information and the terminal ID of the communication terminal 10 from the acquired user information, and outputs the position information and the terminal ID to the position information collection device 50.

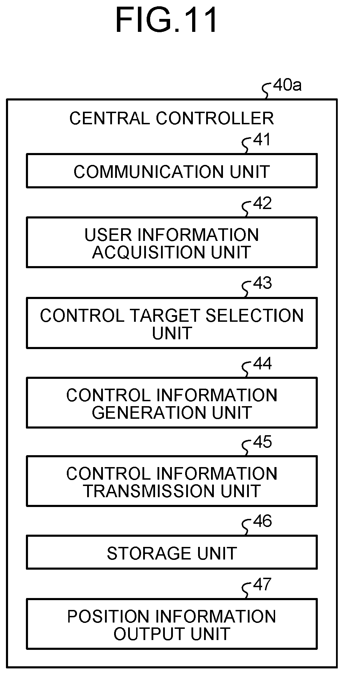

FIG. 11 is a diagram illustrating an exemplary configuration of the central controller 40a according to the fifth embodiment. The central controller 40a includes the communication unit 41, the user information acquisition unit 42, the control target selection unit 43, the control information generation unit 44, the control information transmission unit 45, the storage unit 46, and a position information output unit 47.

The communication unit 41, the user information acquisition unit 42, the control target selection unit 43, the control information generation unit 44, the control information transmission unit 45, and the storage unit 46 of the central controller 40a are similar to the communication unit 41, the user information acquisition unit 42, the control target selection unit 43, the control information generation unit 44, the control information transmission unit 45, and the storage unit 46 of the central controller 40 according to the first to fourth embodiments. The position information output unit 47 transmits, from among the information included in the user information acquired by the user information acquisition unit 42 from the communication terminal 10, the terminal ID of the communication terminal 10 and the position information of the communication terminal 10 to the position information collection device 50.

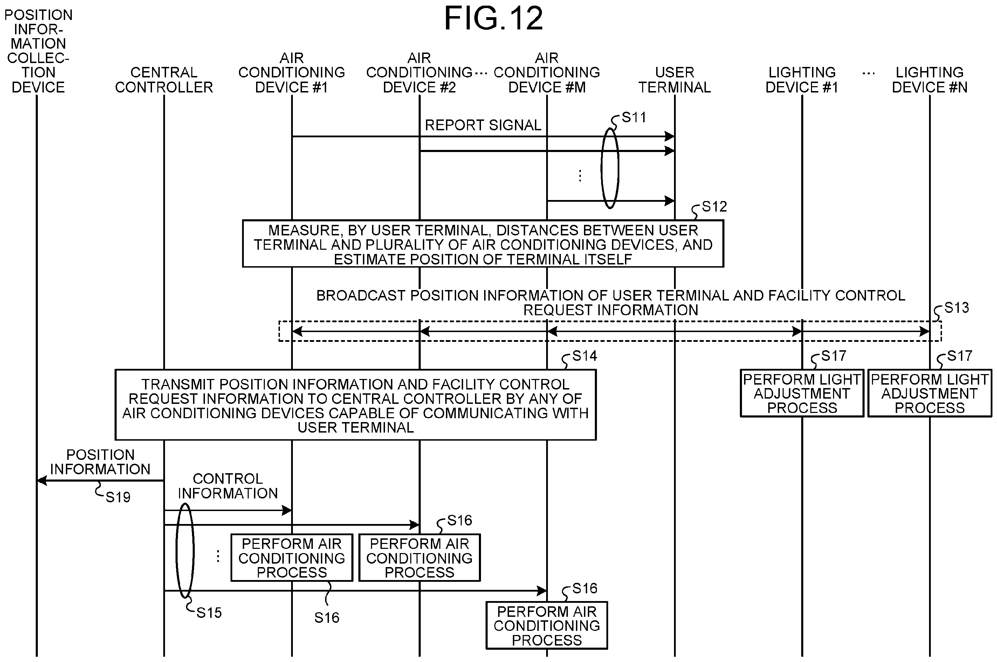

FIG. 12 is a sequence diagram illustrating an example of an operation of the facility control system 1a according to the fifth embodiment. FIG. 12 is a diagram obtained by partially changing the sequence diagram in FIG. 6. Step numbers same as those in the sequence diagram in FIG. 6 indicate the same processes as those in FIG. 6.

As illustrated in FIG. 12, when acquiring the position information of the user terminal and the facility control request information by executing step S14, the central controller of the facility control system 1a transmits the position information of the user terminal to the position information collection device (step S19). At this time of operation, the central controller transmits the terminal ID of the user terminal together. The position information collection device stores the position information and the terminal ID of the user terminal received from the central controller in association with information of the time point at which the position information collection device receives the position information and the terminal ID. Note that the execution timing of step S19 may be after the execution of step S15.

In this manner, the facility control system 1a according to the present embodiment further includes the position information collection device 50, and the position information collection device 50 collects and manages the position information of the communication terminal 10. As a result, the position information of the communication terminal 10 can be utilized in other systems.

Note that, in each embodiment, the communication terminal 10 performs distance measurement and position determination, and transmits the obtained position information to the central controller 40 or 40a via the air conditioning device 20, but the central controllers 40 and 40a may determine the position. For example, in the sequence in FIG. 6 described in the first embodiment, when the communication terminal 10 as a user terminal receives report signals in step S11, the communication terminal 10 broadcasts the facility control request information without executing step S12. The air conditioning device 20 that has received the facility control request information calculates the distance to the communication terminal 10 on the basis of the transmission time point of the report signal and the reception time point of the facility control request information, and transmits the distance information indicating the calculated distance, the position information of the device itself (air conditioning device 20), and the facility control request information received from the communication terminal 10 to the central controller 40. The central controller 40 estimates the position of the communication terminal 10 from the distance information and position information received from the plurality of air conditioning devices 20, determines the air conditioning device to be controlled, and generates control information on the basis of the estimated position and the facility control request information. In this manner, a processing load on the communication terminal 10 can be reduced.

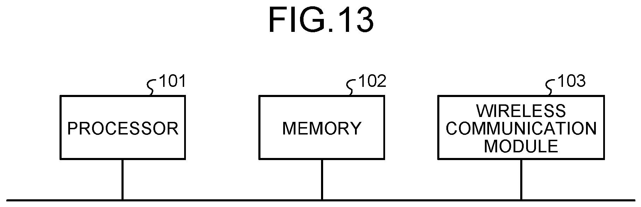

Next, hardware that realizes each unit of the communication terminal 10 described in each embodiment will be described. The communication terminal 10 can be realized by, for example, hardware illustrated in FIG. 13, specifically, by a processor 101, a memory 102, and a wireless communication module 103. FIG. 13 is a diagram illustrating an example of the hardware that realizes the communication terminal 10 according to the first to fifth embodiments.

The processor 101 is a central processing unit (CPU, also referred to as a central processing device, a processing device, an arithmetic device, a microprocessor, a microcomputer, a digital signal processor (DSP)), or a system large scale integration (LSI), or the like. The memory 102 is a random access memory (RAM), a read only memory (ROM), an erasable programmable read only memory (EPROM), an electrically erasable programmable read only memory (EEPROM) (registered trademark), or the like. The wireless communication module 103 is a component in which electronic circuits for transmitting and receiving ultra wide band signals are integrated.

The communication unit 11 of the communication terminal 10 is realized by the wireless communication module 103, and the storage unit 14 is realized by the memory 102. In addition, the distance measurement unit 12, the position estimation unit 13, and the user information notification unit 15 of the communication terminal 10 are realized by the processor 101 and the memory 102. That is, a program for operating as the distance measurement unit 12, the position estimation unit 13, and the user information notification unit 15 is stored in the memory 102, and the processor 101 reads and executes the program, thereby realizing the distance measurement unit 12, the position estimation unit 13, and the user information notification unit 15 of the communication terminal 10.

Note that the program, stored in the memory 102, for operating as the distance measurement unit 12, the position estimation unit 13, and the user information notification unit 15 may be provided to a user or the like in a state of being written in a storage medium such as, for example, a compact disc (CD) -ROM or a digital versatile disc (DVD) -ROM, or may be provided via a network.

In addition, FIG. 13 is an example of hardware in a case where the communication terminal 10 is realized by the general-purpose processor 101 and memory 102, but the communication terminal 10 may be realized by a dedicated processing circuitry instead of the processor 101 and the memory 102. That is, the distance measurement unit 12, the position estimation unit 13, the storage unit 14, and the user information notification unit 15 may be realized by dedicated processing circuitry. Here, the dedicated processing circuitry that realizes the distance measurement unit 12, the position estimation unit 13, the storage unit 14, and the user information notification unit 15 is a single circuit, a composite circuit, an application specific integrated circuit (ASIC), a field programmable gate array (FPGA), or a circuit obtained by combining these circuits.

The hardware that realizes each unit of the communication terminal 10 has been described, but each unit of the air conditioning device 20 and each unit of the lighting device 30 described in each embodiment can also be realized by hardware similar to the processor 101, the memory 102, and the wireless communication module 103 illustrated in FIG. 13. Note that, in a case of realizing the air conditioning device 20, a communication circuit for performing communication via the communication line 90 is further required in addition to the processor 101, the memory 102, and the wireless communication module 103. Specifically, in addition, each unit of the central controllers 40 and 40a described in each embodiment can be realized by hardware similar to the processor 101 and the memory 102 illustrated in FIG. 13, and a communication circuit for performing communication via the communication line 90.

### Reference Signs List

1, 1a facility control system; 10 communication terminal; 11, 21, 31, 41 communication unit; 12 distance measurement unit; 13 position estimation unit; 14, 24, 33, 46 storage unit; 15 user information notification unit; 20 air conditioning device; 22 device information reporting unit; 23 relay processing unit; 25 air conditioning control unit; 30 lighting device; 32 light adjustment processing unit; 40, 40a central controller; 42 user information acquisition unit; 43 control target selection unit; 44 control information generation unit; 45 control information transmission unit; 47 position information output unit; 50 position information collection device; 90 communication line.

## Claims

1. A facility control system (1), comprising:
a plurality of facilities (20, 30) capable of performing communication using an ultra wide band, UWB, signal;
a central controller (40) to control some or all of the plurality of facilities (20, 30); and
a communication terminal (10) capable of performing communication using the ultra wide band signal, wherein
the central controller (40) and the plurality of facilities as control targets of the central controller (40) are connected to each other via a communication line (90),
the communication terminal (10) includes:
a communication unit (11) to communicate with the plurality of facilities (20, 30) using the ultra wide band signal;
a distance measurement unit (12) to calculate distances from the communication terminal (10) to the plurality of facilities as counterparts in UWB communication on a basis of a result of the UWB communication by the communication unit (11);
a position estimation unit (13) to estimate the position of the communication terminal (10) on the basis of the distances calculated by the distance measurement unit (12); and
a user information notification unit (15) to notify the central controller (40) and the plurality of facilities of user information including position information indicating the position estimated by the position estimation unit (13) and request information relating to control of the facilities as control targets of the central controller (40) and having been acquired from a user, and to cause the central controller (40) and the facilities as control targets to perform control in accordance with the user information notified, and
the communication terminal (10) is configured to repeatedly execute calculation of the distances by the distance measurement unit (12), estimation of the position by the position estimation unit (13), and notification of the user information by the user information notification unit (15), and to change the frequency of repeating the calculation of the distances by the distance measurement unit (12), the estimation of the position by the position estimation unit (13), and the notification of the user information by the user information notification unit (15) on the basis of a moving state of the communication terminal (10).

2. The facility control system (1) according to claim **1,** wherein
the user information notification unit (15) is configured to notify the central controller (40) of the user information via the facility connected to the communication line (90).

3. The facility control system (1) according to claim 1 or 2, wherein
in a case where firmware of the facility that is not a control target of the central controller (40) differs from a latest firmware, the facility that is not the control target of the central controller (40) is configured to update the firmware with firmware of a latest version via the communication terminal (10).

4. The facility control system (1) according to any one of claims 1 to 3, wherein
the facilities (20, 30) include an air conditioning device (20) and a lighting device (30), and
the central controller (40) is configured to designate the air conditioning device (20) as a control target.

5. The facility control system (1) according claim 1 or 2, wherein
the facilities (20, 30) include an air conditioning device (20) and a lighting device (30), and
the central controller (40) is configured to designate all the air conditioning device (20) and the lighting device (30) as control targets.

6. The facility control system (1a) according to any one of claims 1 to 5, further comprising
a position information collection device (50) configured to collect the position information from the communication terminal (10) and to manage the position information.

## Patentansprüche

1. Einrichtungssteuerungssystem (1), umfassend:
eine Vielzahl von Einrichtungen (20, 30), die in der Lage sind, eine Kommunikation unter Verwendung eines Ultrabreitbandsignals, UWB, durchzuführen;
eine zentrale Steuereinheit (40) zum Steuern einiger oder aller der Vielzahl von Einrichtungen (20, 30); und
ein Kommunikationsendgerät (10), das in der Lage ist, eine Kommunikation unter Verwendung des Ultrabreitbandsignals durchzuführen, wobei
die zentrale Steuereinheit (40) und die Vielzahl von Einrichtungen als Steuerungsziele der zentralen Steuereinheit (40) über eine Kommunikationsleitung (90) miteinander verbunden sind,
wobei das Kommunikationsendgerät (10) aufweist:
eine Kommunikationseinheit (11) zum Kommunizieren mit der Vielzahl von Einrichtungen (20, 30) unter Verwendung des Ultrabreitbandsignals;
eine Entfernungsmesseinheit (12) zum Berechnen von Entfernungen von dem Kommunikationsendgerät (10) zu der Vielzahl von Einrichtungen als Gegenstücke in der UWB-Kommunikation auf der Grundlage eines Ergebnisses der UWB-Kommunikation durch die Kommunikationseinheit (11);
eine Positionsermittlungseinheit (13) zum Ermitteln der Position des Kommunikationsendgeräts (10) auf der Grundlage der von der Entfernungsmesseinheit (12) berechneten Entfernungen; und
eine Benutzerinformationen-Meldeeinheit (15) zum Melden von Benutzerinformationen an die zentrale Steuereinheit (40) und die Vielzahl von Einrichtungen, wobei die Benutzerinformationen Positionsinformationen, die die von der Positionsermittlungseinheit (13) ermittelte Position angeben, und Anforderungsinformationen, die sich auf die Steuerung der Einrichtungen als Steuerungsziele der zentralen Steuereinheit (40) beziehen und von einem Benutzer beschafft wurden, aufweisen, und zum Veranlassen der zentralen Steuereinheit (40) und der Einrichtungen als Steuerungsziele, eine Steuerung gemäß den gemeldeten Benutzerinformationen durchzuführen, und
wobei das Kommunikationsendgerät (10) eingerichtet ist, die Berechnung der Entfernungen durch die Entfernungsmesseinheit (12), die Ermittlung der Position durch die Positionsermittlungseinheit (13) und die Meldung der Benutzerinformationen durch die Benutzerinformationen-Meldeeinheit (15) wiederholt auszuführen und die Häufigkeit der Wiederholung der Berechnung der Entfernungen durch die Entfernungsmesseinheit (12), der Ermittlung der Position durch die Positionsermittlungseinheit (13) und der Meldung der Benutzerinformationen durch die Benutzerinformationen-Meldeeinheit (15) auf der Grundlage eines Bewegungszustands des Kommunikationsendgeräts (10) zu ändern.

2. Einrichtungssteuerungssystem (1) nach Anspruch 1, wobei
die Benutzerinformationen-Meldeeinheit (15) eingerichtet ist, der zentralen Steuereinheit (40) die Benutzerinformationen über die mit der Kommunikationsleitung (90) verbundene Einrichtung zu melden.

3. Einrichtungssteuerungssystem (1) nach Anspruch 1 oder 2, wobei
in einem Fall, in dem sich die Firmware der Einrichtung, die kein Steuerungsziel der zentralen Steuereinheit (40) ist, von einer neuesten Firmware unterscheidet, die Einrichtung, die kein Steuerungsziel der zentralen Steuereinheit (40) ist, so eingerichtet ist, dass die Firmware mit einer Firmware einer neuesten Version über das Kommunikationsendgerät (10) aktualisiert wird.

4. Einrichtungssteuerungssystem (1) nach einem der Ansprüche 1 bis 3, wobei
die Einrichtungen (20, 30) eine Klimatisierungsvorrichtung (20) und eine Beleuchtungsvorrichtung (30) umfassen, und
die zentrale Steuereinheit (40) eingerichtet ist, die Klimatisierungsvorrichtung (20) als ein Steuerungsziel festzulegen.

5. Einrichtungssteuerungssystem (1) nach Anspruch 1 oder 2, wobei
die Einrichtungen (20, 30) eine Klimatisierungsvorrichtung (20) und eine Beleuchtungsvorrichtung (30) umfassen, und
die zentrale Steuereinheit (40) eingerichtet ist, alle der Klimatisierungsvorrichtung (20) und der Beleuchtungsvorrichtung (30) als Steuerungsziele festzulegen.

6. Einrichtungssteuerungssystem (1a) nach einem der Ansprüche 1 bis 5, ferner umfassend
eine Positionsinformationen-Sammelvorrichtung (50), die eingerichtet ist, die Positionsinformationen von dem Kommunikationsendgerät (10) zu sammeln und die Positionsinformationen zu verwalten.

## Revendications

1. Système de commande d'équipements (1), comprenant :
une pluralité d'équipements (20, 30) capables d'effectuer une communication en utilisant un signal à bande ultra-large, ULB ;
un dispositif de commande central (40) pour commander certaines ou la totalité de la pluralité d'équipements (20, 30) ; et
un terminal de communication (10) capable d'effectuer une communication en utilisant le signal à bande ultra-large, dans lequel
le dispositif de commande central (40) et la pluralité d'équipements en tant que cibles de commande du dispositif de commande central (40) sont connectés les uns aux autres via une ligne de communication (90),
le terminal de communication (10) inclut :
une unité de communication (11) pour communiquer avec la pluralité d'équipements (20, 30) en utilisant le signal à bande ultra-large ;
une unité de mesure de distance (12) pour calculer des distances entre le terminal de communication (10) et la pluralité d'équipements homologues de communication dans une communication ULB sur la base d'un résultat de la communication ULB par l'unité de communication (11) ;
une unité d'estimation de position (13) pour estimer la position du terminal de communication (10) sur la base des distances calculées par l'unité de mesure de distance (12) ; et
une unité de notification d'informations d'utilisateur (15) pour notifier au dispositif de commande central (40) et à la pluralité d'équipements des informations d'utilisateur incluant des informations de position indiquant la position estimée par l'unité d'estimation de position (13) et demander des informations relatives à une commande des équipements en tant que cibles de commande du dispositif de commande central (40) et ayant été acquises auprès d'un utilisateur, et pour amener le dispositif de commande central (40) et les équipements en tant que cibles de commande à effectuer une commande conformément aux informations d'utilisateur notifiées, et
le terminal de communication (10) est configuré pour exécuter de manière répétée le calcul des distances par l'unité de mesure de distance (12), l'estimation de la position par l'unité d'estimation de position (13) et la notification des informations d'utilisateur par l'unité de notification d'informations d'utilisateur (15), et pour changer la fréquence de répétition du calcul des distances par l'unité de mesure de distance (12), de l'estimation de la position par l'unité d'estimation de position (13) et de la notification des informations d'utilisateur par l'unité de notification d'informations d'utilisateur (15) sur la base d'un état de déplacement du terminal de communication (10).

2. Système de commande d'équipement (1) selon la revendication 1, dans lequel
l'unité de notification d'informations d'utilisateur (15) est configurée pour notifier au dispositif de commande central (40) les informations d'utilisateur via l'équipement connecté à la ligne de communication (90).

3. Système de commande d'équipement (1) selon la revendication 1 ou 2, dans lequel
dans un cas où le micrologiciel de l'équipement qui n'est pas une cible de commande du dispositif de commande central (40) diffère d'un micrologiciel le plus récent, l'équipement qui n'est pas la cible de commande du dispositif de commande central (40) est configuré pour mettre à jour le micrologiciel avec le micrologiciel d'une version la plus récente via le terminal de communication (10).

4. Système de commande d'équipement (1) selon l'une quelconque des revendications 1 à 3 ; dans lequel
les équipements (20, 30) incluent un dispositif de climatisation (20) et un dispositif d'éclairage (30), et
le dispositif de commande central (40) est configuré pour désigner le dispositif de climatisation (20) en tant que cible de commande.

5. Système de commande d'équipement (1) selon la revendication 1 ou 2, dans lequel
les équipements (20, 30) incluent un dispositif de climatisation (20) et un dispositif d'éclairage (30), et
le dispositif de commande central (40) est configuré pour désigner la totalité du dispositif de climatisation (20) et du dispositif d'éclairage (30) en tant que cibles de commande.

6. Système de commande d'équipement (1a) selon l'une quelconque des revendications 1 à 5, comprenant en outre
un dispositif de collecte d'informations de position (50) configuré pour collecter les informations de position à partir du terminal de communication (10) et pour gérer les informations de position.
